# EUROPEAN PATENT APPLICATION

(11) **EP 4 435 599 A1**
(43) Date of publication of application: **25.09.2024**
(21) Application number: 22914613.9
(22) Date of filing: 26.12.2022
(51) Int. Cl.: G06F 9/48

(54) **TASK PROCESSING METHOD AND APPARATUS**

(30) Priority: 28.12.2021 CN 202111633084
(71) Applicant: Huawei Technologies Co., Ltd., Shenzhen, Guangdong 518129 (CN)
(72) Inventor: CHEN, Xin, Shenzhen, Guangdong 518129 (CN); GAO, Zhihui, Shenzhen, Guangdong 518129 (CN); GAO, Yongliang, Shenzhen, Guangdong 518129 (CN); ZHENG, Liming, Shenzhen, Guangdong 518129 (CN); LIN, Cheng, Shenzhen, Guangdong 518129 (CN); ZHAO, Mingyue, Shenzhen, Guangdong 518129 (CN); DAI, Lei, Shenzhen, Guangdong 518129 (CN); LI, Xiuchang, Shenzhen, Guangdong 518129 (CN)
(74) Representative: Goddar, Heinz J.
(86) International application number: PCT/CN2022/141776
(87) International publication number: WO 2023/125359

(57) **Abstract**

This application discloses a task processing method. The method is applied to a computer system, and the computer system includes a user mode and a kernel mode. The user mode includes a plurality of tasks, and the tasks are threads or processes. The method includes: detecting, in the kernel mode, a type of a first request of entering a kernel entry; when the type of the first request indicates that a first task is suspended in the user mode, switching at least from a user-mode context of the first task to a user-mode context of a second task, recording a suspended state of the first task and a running time from a moment of starting to run the first task to a moment of suspending the first task, and skipping processing other scheduling statuses of the first task; and running the second task in the user mode. In technical solutions of this application, kernel-mode contexts are not switched, only a part of scheduling statuses of the first task are recorded, and other scheduling statuses are not processed. In this way, switched content is reduced, and switching efficiency is improved. This improves performance of the computer system.

## Description

This application claims priority to Chinese Patent Application No. 202111633084.9, filed with the China National Intellectual Property Administration on December 28, 2021 and entitled "TASK PROCESSING METHOD AND APPARATUS", which is incorporated herein by reference in its entirety.

### TECHNICAL FIELD

This application relates to the field of computer technologies, and specifically, to a task processing method and apparatus.

### BACKGROUND

With development of hardware technologies, computing resources of a computer system are increasingly abundant, there are hundreds or even thousands of processing cores, and a computing speed of each core is increasingly high. In addition, a software system needs to process increasing tasks such as threads or processes, and a quantity of times of switching between tasks increases greatly, which requires higher performance.

The computer system includes a user mode and a kernel mode. When switching to a thread B in the user mode, a thread A in the user mode needs to first enter the kernel mode. The thread A can be switched to the thread B only after switching from a user-mode context, a kernel-mode context, and all scheduling statuses of the thread A to a kernel-mode context, a user-mode context, and all scheduling statuses of the thread B is completed in the kernel mode. This leads to low switching efficiency, and affects performance of the computer system.

### SUMMARY

Embodiments of this application provide a task processing method, to improve efficiency of switching a user-mode task and improve performance of a computer system. Embodiments of this application further provide a corresponding apparatus, device, computer-readable storage medium, computer program product, and the like.

A first aspect of this application provides a task processing method. The method is applied to a computer system, and the computer system includes a user mode and a kernel mode. The user mode includes a plurality of tasks, and the tasks are threads or processes. The method includes: detecting, in the kernel mode, a type of a first request of entering a kernel entry, where the kernel entry is an entry from the user mode to the kernel mode, and the first request is triggered by a first task in the user mode; when the type of the first request indicates that the first task is suspended in the user mode, switching at least from a user-mode context of the first task to a user-mode context of a second task and recording a first scheduling status of the first task, where the first scheduling status of the first task includes a suspended state of the first task in the user mode and a running time from a moment of starting to run the first task to a moment of suspending the first task; and running the second task in the user mode.

In this application, the computer system may be a server, a terminal device, or a virtual machine (virtual machine, VM). The kernel mode and the user mode are two modes or two states of an operating system (operating system, OS). The kernel mode is usually also referred to as a privileged state, and the user mode is usually referred to as a non-privileged state. The process is a minimum unit for resource allocation, and the thread is a minimum unit for operating system scheduling (processor scheduling). One process may include one or more threads.

In this application, the kernel entry may be any entry that may be used to enter the kernel mode from the user mode, for example, a system call entry, an exception entry, or an interrupt entry.

In this application, a user-mode context is a group of data indispensable for running a task in the user mode, for example, data in a register of a processor. Switching from a user-mode context of the first task to a user-mode context of the second task means that data required for running the first task in the user mode is moved out of the register, and data required for running the second task in the user mode is written into the register. The register may include any one or more of a general-purpose register, a program counter (program counter, PC), a program state (program state, PS) register, and the like.

In this application, a scheduling status of a task may include a running state or a suspended state of the task, running duration of the task, namely, a running time from a moment of starting to run the task to a moment of suspending the task, and states such as whether the task enters a queue or leaves a queue, whether blocking, an interrupt, or exception occurs, and whether the task is called by using another thread. In this application, the first scheduling status of the first task includes the suspended state of the first task in the user mode and the running time from the moment of starting to run the first task to the moment of suspending the first task, and a second scheduling status of the first task is a scheduling status in all scheduling statuses of the first task other than the first scheduling status.

It can be learned from the first aspect that, after the first request of the first task enters the kernel mode from the user mode, if it is determined, by detecting the type of the first request, that the first task is suspended in the user mode, only the suspended state of the first task in the user mode and the running time from the moment of starting to run the first task to the moment of suspending the first task are recorded, and other scheduling statuses are not processed. In this way, in a procedure of switching from the first task to the second task for running, processed content can be reduced, and switching efficiency can be improved. This improves performance of the computer system.

In the first aspect, the type of the first request may be a preconfigured request type or a non-preconfigured request type, and the non-preconfigured request type is a request type that is not the preconfigured request type.

In this application, the preconfigured request type is related to a service scenario, and a quantity of occurrences of the preconfigured request type in the service scenario is greater than a quantity of occurrences of the non-preconfigured request type in the service scenario.

In this application, preconfigured request types in some service scenarios are listed as follows:

In a service scenario focusing on a file system, the preconfigured request type may be one or more of types such as creating, reading, or writing a file, a directory, content of a soft link, or a file attribute, controlling or managing a file descriptor, or monitoring a file. Different request types may be represented by different identifiers. For example, a type of a request of creating the file may be represented by 00001, and a type of a request of reading the file may be represented by 00002. Certainly, different request types may alternatively be represented in other manners, as long as the corresponding request types can be determined. A specific representation form of the request type is not limited in this application.

In a service scenario focusing on a network system, the preconfigured request type may be one or more of a request type for receiving a data packet, a request type for sending a data packet, or a request type for listening.

In a service scenario focusing on hardware driver input/output (input/output, I/O), the preconfigured request type may be a request type of a driver I/O.

In a service scenario focusing on I/O multiplexing, the preconfigured request type may be a request type of an I/O operation.

In a service scenario focusing on a clock (Timer) operation, the preconfigured request type may be a clock request type.

In a service scenario focusing on a memory operation, the preconfigured request type may be a request type related to a memory request.

In a service scenario focusing on signal processing, the preconfigured request type may be a request type of a wait signal.

In a service scenario focusing on inter-process communication, the preconfigured request type may be a request type of a remote procedure call (remote procedure call, RPC), a request type of a sent message, or a request type of a synchronization lock operation.

In a service scenario focusing on file system management, the preconfigured request type may be a mount request type or a status obtaining request type.

In a scenario focusing on an asynchronous operation, the preconfigured request type may be a request type for converting a synchronous operation into an asynchronous operation.

The foregoing is merely some examples. In different service scenarios, selection of the preconfigured request type may be determined based on an actual situation. This is not limited in this application.

In a possible implementation of the first aspect, the step in the first aspect of switching at least from a user-mode context of the first task to a user-mode context of a second task when the type of the first request indicates that the first task is suspended in the user mode is specifically: when the type of the first request indicates that the first task is suspended in the user mode, and the type of the first request is a preconfigured request type, switching only from the user-mode context of the first task to the user-mode context of the second task.

In this possible implementation, when the type of the first request is the preconfigured request type, only the user-mode context of the first task needs to be switched to the user-mode context of the second task, and a kernel-mode context of the first task does not need to be switched to a kernel-mode context of the second task. This reduces switched content, and improves switching efficiency.

In a possible implementation of the first aspect, the step in the first aspect of switching at least from a user-mode context of the first task to a user-mode context of a second task when the type of the first request indicates that the first task is suspended in the user mode is specifically: when the type of the first request indicates that the first task is suspended in the user mode, and the type of the first request is a non-preconfigured request type, switching from the user-mode context of the first task to the user-mode context of the second task, and switching from the kernel-mode context of the first task to the kernel-mode context of the second task.

In this possible implementation, the kernel-mode context is a group of kernel-mode data that supports task running. When the type of the first request is the non-preconfigured request type, for example, an interrupt request or an exception request in some service scenarios that is not the preconfigured request type, and when the interrupt request or the exception request is detected in the kernel mode, the kernel-mode context is further switched when the user-mode context is switched. In this implementation, all the scheduling statuses of the first task still do not need to be processed, and task switching efficiency can still be improved.

In a possible implementation of the first aspect, the method further includes: after the running the second task in the user mode, the method further includes: detecting a type of a second request of entering the kernel entry, where the second request is triggered by a target task in the user mode, the target task is the second task or a last task in at least one task that continuously runs after the second task, and the second task and the at least one task both trigger a request of the preconfigured request type; when the type of the second request indicates that the target task is suspended in the user mode, and the type of the second request is the preconfigured request type, recording a first scheduling status of the target task, and switching only from a user-mode context of the target task to a user-mode context of a third task, where the first scheduling status of the target task includes a suspended state of the target task in the user mode and a running time from a moment of starting to run the target task to a moment of suspending the target task; and running the third task in the user mode.

In this possible implementation, after the first task is switched to the second task by switching only the user-mode context and recording the first scheduling status of the first task, the second task or several consecutive tasks all initiate requests of the preconfigured request types. In this case, only user-mode contexts of the tasks need to be switched each time the tasks are switched, and kernel-mode contexts of the tasks do not need to be switched. This further improves task switching efficiency.

In a possible implementation of the first aspect, after the running the second task in the user mode, the method further includes: detecting a type of a second request of entering the kernel entry, where the second request is triggered by a target task in the user mode, and the target task is the second task or a last task in at least one task that continuously runs after the second task; and when the target task is the last task in the at least one task, the second task and each task that is in the at least one task and that runs before the target task both trigger a request of the preconfigured request type; and when the type of the second request indicates that the target task is suspended in the user mode, and the type of the second request is a non-preconfigured request type, recording a first scheduling status of the target task, and switching from the kernel-mode context of the first task to a kernel-mode context of the target task, where the first scheduling status of the target task includes a suspended state of the target task in the user mode and a running time from a moment of starting to run the target task to a moment of suspending the target task.

In this possible implementation, after the first task is switched to the second task by switching only the user-mode context and recording the first scheduling status of the first task, the second task initiates the second request of the non-preconfigured request type; or if the second task and several consecutive tasks all initiate requests of the preconfigured request types, and the second request of the non-preconfigured request type is initiated only when the target task arrives, the kernel-mode context of the first task needs to be directly switched to the kernel-mode context of the target task. This reduces switched content, and improves switching efficiency.

In a possible implementation of the first aspect, when the target task is not blocked, after the switching from the kernel-mode context of the first task to a kernel-mode context of the target task, the method further includes: returning to the user mode to continue to run the target task.

In this possible implementation, when the kernel-mode context of the first task is switched to the kernel-mode context of the target task, if the target task is not blocked, the user mode may be returned to continue to run the target task. This implements fast restoration of the target task.

In a possible implementation of the first aspect, when the target task is blocked, the method further includes: scheduling a third task by using a native scheduling procedure, and switching from the target task to the third task, where the native scheduling procedure needs to process all scheduling statuses from the first task to each task in the at least one task; and running the third task in the user mode.

In this possible implementation, after the kernel-mode context of the first task is switched to the kernel-mode context of the target task, if the target task is blocked, the third task needs to be scheduled by using the native scheduling procedure. The native scheduling procedure is a procedure in which not only a user-mode context and a kernel-mode context need to be switched, but also all scheduling statuses of a task before switching need to be processed during task switching. In this application, compatibility with the native scheduling procedure is further maintained while fast switching is implemented.

In a possible implementation of the first aspect, the scheduling the third task by using a native scheduling procedure in the foregoing step is specifically: modifying a second scheduling status from the first task to each task in the at least one task from a scheduling status, of each task, in a case in which the task starts to run to a scheduling status corresponding to each task when it is determined that the native scheduling procedure is performed on the third task, where the second scheduling status of each task is a scheduling status in all scheduling statuses of the task other than a first scheduling status of the task.

In this possible implementation, when the native scheduling procedure is performed, latest scheduling statuses of the first task, the second task, and each task in the at least one task need to be synchronized. In this way, a kernel may not sense fast switching that occurs before the first task, the second task, and the at least one task, and switching that occurs before these tasks does not affect the native scheduling procedure and is better compatible with the native scheduling procedure.

In a possible implementation of the first aspect, before the detecting a type of a first request of entering a kernel entry, the method further includes: storing the user-mode context of the first task; and when the type of the first request is the preconfigured request type, storing the user-mode context of the first task as a target context, where the target context is used when the first task is scheduled next time.

In this possible implementation, after the first task triggers the first request, the user-mode context of the first task is temporarily stored first. After it is determined that fast switching is performed for the first task, the temporarily stored user-mode context of the first task may be stored as the target context. In this way, when the first task is scheduled next time, the target context may be directly used. This helps fast restore the first task to the user mode for execution.

In a possible implementation of the first aspect, during scheduling of the remote procedure call RPC, the first request includes information about the second task, and the information about the second task is used to schedule the second task.

In this possible implementation, when the first task initiates the first request, the computer system directly specifies, in the user mode, information about the to-be-switched second task, where the information about the second task may be an identifier of the second task. In this way, in the kernel mode, the computer system may directly schedule the second task based on the information about the second task to perform switching. This further improves task switching efficiency.

In a possible implementation of the first aspect, the method further includes: recording the first request and information associated with the first task; running the second task to obtain a return result; returning the return result to the first task based on the information associated with the first task; and switching from the second task back to the first task to continue to run the first task.

In this possible implementation, in an RPC scenario, the first request and the information associated with the first task may be recorded. After the return result of the second task is obtained, the return result is returned to the first task based on the information associated with the first task, and the first task is switched to continue to run the first task.

In a possible implementation of the first aspect, the second task is in a first queue, the first queue is a first in first out (First In First Out, FIFO) queue, and the second task is a task that first enters the first queue among all tasks in the first queue.

In this possible implementation, the first queue may also be referred to as a fast queue. A maintenance manner of the first queue is first in first out. When a task needs to be scheduled from the first queue, only a task that is currently in the first queue and that recently enters the first queue needs to be scheduled.

In a possible implementation of the first aspect, during scheduling of simplified fair scheduling, before performing the native scheduling procedure for the third task, the method further includes: synchronizing a task in a first queue and a scheduling status of the task in the first queue to a second queue, and synchronizing, to the second queue, information that has been output by the third task from the first queue, where the second queue is a queue used for the native scheduling procedure; and synchronizing information about a location, in the second queue, of the task in the first queue to the first queue, where the information about the location is used to adjust a location, in the first queue, of the task in the first queue.

In this possible implementation, the second queue may be referred to as a slow queue, and the slow queue is used to perform the native scheduling procedure. Before the native scheduling procedure is performed, all tasks in the fast queue need to be synchronized to the slow queue. In this way, the native scheduling procedure is more compatible. After the tasks in the fast queue are synchronized to the slow queue, the tasks in the slow queue may be rearranged based on actual situations of the tasks, and these tasks are inserted into proper locations in the slow queue. Then, information about a location, in the slow queue, of at least one task in the fast queue is synchronized to the fast queue, so that the fast queue optimizes a sequence of the at least one task in the fast queue based on the information about the location. In this way, the tasks in the fast queue can obtain more opportunities of being fairly scheduled.

A second aspect of this application provides a task processing apparatus. The apparatus includes a user mode and a kernel mode, the user mode includes a plurality of tasks, and the tasks are threads or processes. The apparatus includes a detection unit, a first processing unit, and a second processing unit. Functions of these units are as follows:

The detection unit is configured to detect, in the kernel mode, a type of a first request of entering a kernel entry, where the kernel entry is an entry from the user mode to the kernel mode, and the first request is triggered by a first task in the user mode.

The first processing unit is configured to: when the type that is of the first request and that is detected by the detection unit indicates that the first task is suspended in the user mode, switch at least from a user-mode context of the first task to a user-mode context of a second task, and record a first scheduling status of the first task, where the first scheduling status of the first task includes a suspended state of the first task in the user mode and a running time from a moment of starting to run the first task to a moment of suspending the first task.

The second processing unit is configured to run, in the user mode, the second task switched by the first processing unit.

It can be learned from the second aspect that, after the first request of the first task enters the kernel mode from the user mode, if it is determined, by detecting the type of the first request, that the first task is suspended in the user mode, only the suspended state of the first task in the user mode and the running time from the moment of starting to run the first task to the moment of suspending the first task are recorded, and other scheduling statuses are not processed. In this way, in a procedure of switching from the first task to the second task for running, processed content can be reduced, and switching efficiency can be improved. This improves performance of a computer system.

In a possible implementation of the second aspect, the first processing unit is specifically configured to: when the type of the first request indicates that the first task is suspended in the user mode, and the type of the first request is a preconfigured request type, switch only from the user-mode context of the first task to the user-mode context of the second task.

In a possible implementation of the second aspect, the first processing unit is specifically configured to: when the type of the first request indicates that the first task is suspended in the user mode, and the type of the first request is a non-preconfigured request type, switch from the user-mode context of the first task to the user-mode context of the second task, and switch from a kernel-mode context of the first task to a kernel-mode context of the second task.

In a possible implementation of the second aspect, the preconfigured request type is related to a service scenario, and a quantity of occurrences of the preconfigured request type in the service scenario is greater than a quantity of occurrences of the non-preconfigured request type in the service scenario.

In a possible implementation of the second aspect, the detection unit is further configured to detect a type of a second request of entering the kernel entry, where the second request is triggered by a target task in the user mode, the target task is the second task or a last task in at least one task that continuously runs after the second task, and the second task and the at least one task both trigger a request of the preconfigured request type.

The first processing unit is further configured to: when the type of the second request indicates that the target task is suspended in the user mode, and the type of the second request is the preconfigured request type, record a first scheduling status of the target task, and switch only from a user-mode context of the target task to a user-mode context of a third task, where the first scheduling status of the target task includes a suspended state of the target task in the user mode and a running time from a moment of starting to run the target task to a moment of suspending the target task.

The second processing unit is further configured to run the third task in the user mode.

In a possible implementation of the second aspect, the detection unit is further configured to detect a type of a second request of entering the kernel entry, where the second request is triggered by a target task in the user mode, and the target task is the second task or a last task in at least one task that continuously runs after the second task. When the target task is the last task in the at least one task, the second task and each task that is in the at least one task and that runs before the target task both trigger a request of the preconfigured request type.

The first processing unit is further configured to: when the type of the second request indicates that the target task is suspended in the user mode, and the type of the second request is a non-preconfigured request type, record a first scheduling status of the target task, and switch from the kernel-mode context of the first task to a kernel-mode context of the target task, where the first scheduling status of the target task includes a suspended state of the target task in the user mode and a running time from a moment of starting to run the target task to a moment of suspending the target task.

In a possible implementation of the second aspect, the second processing unit is further configured to: when the target task is not blocked, return to the user mode to continue to run the target task.

In a possible implementation of the second aspect, the first processing unit is further configured to: when the target task is blocked, schedule the third task by using a native scheduling procedure, and switch from the target task to the third task, where the native scheduling procedure needs to process all scheduling statuses from the first task to each task in the at least one task.

The second processing unit is further configured to run the third task in the user mode.

In a possible implementation of the second aspect, the first processing unit is specifically configured to modify a second scheduling status from the first task to each task in the at least one task from a scheduling status, of each task, in a case in which the task starts to run to a scheduling status corresponding to each task when it is determined that the native scheduling procedure is performed on the third task, where the second scheduling status of each task is a scheduling status in all scheduling statuses of the task other than a first scheduling status of the task.

In a possible implementation of the second aspect, during scheduling of a remote procedure call RPC, the first request includes information about the second task, and the information about the second task is used to schedule the second task.

In a possible implementation of the second aspect, the second processing unit is further configured to: record the first request and information associated with the first task; run the second task to obtain a return result; return the return result to the first task based on the information associated with the first task; and switch from the second task back to the first task to continue to run the first task.

In a possible implementation of the second aspect, the second task is in a first queue, the first queue is a first in first out queue, and the second task is a task that first enters the first queue among all tasks in the first queue.

In a possible implementation of the second aspect, in a simplified fair scheduling scenario, the second processing unit is further configured to: synchronize a task in the first queue and a scheduling status of the task in the first queue to a second queue, and synchronize, to the second queue, information that has been output by the third task from the first queue, where the second queue is a queue used for the native scheduling procedure; and synchronize information about a location, in the second queue, of the task in the first queue to the first queue, where the information about the location is used to adjust a location, in the first queue, of the task in the first queue.

The task processing apparatus has a function of implementing the method according to any one of the first aspect or the possible implementations of the first aspect. The function may be implemented by hardware, or may be implemented by hardware executing corresponding software. The hardware or the software includes one or more modules corresponding to the foregoing function, for example, the detection unit, the first processing unit, and the second processing unit. These units may be implemented by using one processing unit or a plurality of processing units. For related content of any one of the second aspect or the possible implementations of the second aspect, refer to related content according to any one of the first aspect or the possible implementations of the first aspect for understanding.

A third aspect of this application provides a computer device. The computer device includes at least one processor, a memory, an input/output (input/output, I/O) interface, and computer-executable instructions that are stored in the memory and that can run on the processor. When the computer-executable instructions are executed by the processor, the processor performs the method according to any one of the first aspect or the possible implementations of the first aspect.

A fourth aspect of this application provides a computer-readable storage medium storing one or more computer-executable instructions. When the computer-executable instructions are executed by a processor, the one or more processors perform the method according to any one of the first aspect or the possible implementations of the first aspect.

A fifth aspect of this application provides a computer program product storing one or more computer-executable instructions. When the computer-executable instructions are executed by one or more processors, the one or more processors perform the method according to any one of the first aspect or the possible implementations of the first aspect.

A sixth aspect of this application provides a chip system. The chip system includes at least one processor, and the at least one processor is configured to support a task processing apparatus to implement the function in any one of the first aspect or the possible implementations of the first aspect. In a possible design, the chip system may further include a memory, and the memory is configured to store program instructions and data that are necessary for the task processing apparatus. The chip system may include a chip, or may include a chip and another discrete component.

### BRIEF DESCRIPTION OF DRAWINGS

FIG. 1 is a schematic diagram of an embodiment of a computer system according to an embodiment of this application;
FIG. 2 is a schematic diagram of another embodiment of a computer system according to an embodiment of this application;
FIG. 3 is a schematic diagram of an embodiment of a task processing method according to an embodiment of this application;
FIG. 4 is a schematic diagram of another embodiment of a task processing method according to an embodiment of this application;
FIG. 5 is a schematic diagram of another embodiment of a task processing method according to an embodiment of this application;
FIG. 6 is a schematic diagram of another embodiment of a task processing method according to an embodiment of this application;
FIG. 7 is a schematic diagram of another embodiment of a task processing method according to an embodiment of this application;
FIG. 8 is a schematic diagram of another embodiment of a task processing method according to an embodiment of this application;
FIG. 9 is a schematic diagram of another embodiment of a computer system according to an embodiment of this application;
FIG. 10 is a schematic diagram of another embodiment of a task processing method according to an embodiment of this application;
FIG. 11 is a schematic diagram of another embodiment of a task processing method according to an embodiment of this application;
FIG. 12 is a schematic diagram of another embodiment of a task processing method according to an embodiment of this application;
FIG. 13 is a schematic diagram of an embodiment of a task processing apparatus according to an embodiment of this application; and
FIG. 14 is a schematic diagram of a structure of a computer device according to an embodiment of this application.

### DESCRIPTION OF EMBODIMENTS

The following describes embodiments of this application with reference to accompanying drawings. It is clear that the described embodiments are merely some rather than all of embodiments of this application. A person of ordinary skill in the art may know that with development of technologies and emergence of new scenarios, technical solutions provided in embodiments of this application are also applicable to similar technical problems.

In the specification, claims, and the accompanying drawings of this application, the terms "first", "second", and so on are intended to distinguish between similar objects but do not necessarily indicate a specific order or sequence. It should be understood that the data termed in such a way is interchangeable in proper circumstances so that embodiments described herein can be implemented in other orders than the order illustrated or described herein. In addition, the terms "include" and "have" and any other variants are intended to cover the non-exclusive inclusion. For example, a procedure, method, system, product, or device that includes a list of steps or units is not necessarily limited to those expressly listed steps or units, but may include other steps or units not expressly listed or inherent to such a procedure, method, product, or device.

Embodiments of this application provide a task processing method, to improve efficiency of switching a user-mode thread and improve performance of a computer system. Embodiments of this application further provide a corresponding apparatus, device, computer-readable storage medium, computer program product, and the like. Details are separately described below.

The task processing method provided in embodiments of this application is applied to the computer system. The computer system may be a server, a terminal device, or a virtual machine (virtual machine, VM).

The terminal device (which may also be referred to as user equipment (user equipment, UE)) is a device having wireless transmission and reception functions, and may be deployed on land, including an indoor or outdoor device, a handheld device, or a vehicle-mounted device, or may be deployed on water (for example, on a steamship), or may be deployed in the air (for example, on an airplane, a balloon, or a satellite). The terminal may be a mobile phone (mobile phone), a tablet computer (pad), a computer having wireless transmission and reception functions, a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like.

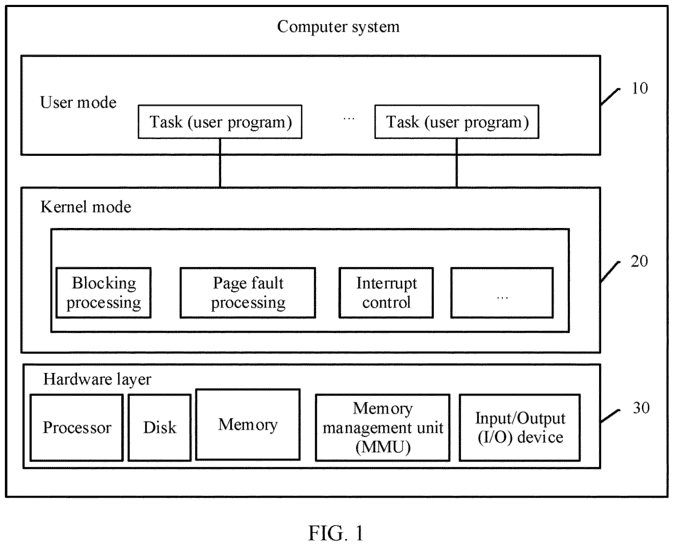

An architecture of the computer system may be understood with reference to FIG. 1. FIG. 1 is a schematic diagram of the architecture of the computer system.

As shown in FIG. 1, the architecture of the computer system includes a user mode 10, a kernel mode 20, and a hardware layer 30. The user mode 10 and the kernel mode 20 are two modes or two states of an operating system (operating system, OS). The kernel mode is usually also referred to as a privileged state, and the user mode is usually referred to as a non-privileged state.

The user mode 10 includes a plurality of tasks. The task is a user program, and may be a process or a thread. The process is a minimum unit for resource allocation, and the thread is a minimum unit for operating system scheduling (processor scheduling). One process may include one or more threads.

In the OS, the kernel mode 20 is responsible for managing a key resource, and provides an OS call entry for a user-mode process or thread, so as to provide a service in a kernel, for example, services such as blocking processing, page fault (page fault, PF) processing, page table management, and interrupt control.

The hardware layer 30 includes hardware resources on which running of the kernel mode 20 are based, for example, a processor, a memory, a memory management unit (memory management unit, MMU), an input/output (input/output, I/O) device, and a disk (disk). The processor may include a register group, and the register group may include a plurality of types of registers, for example, a stack frame register, a general-purpose register, and a nonvolatile (callee-saved) register. The register is configured to store a context of the thread or a context of a goroutine of the thread.

The MMU is computer hardware responsible for processing a memory access request from a central processing unit (central processing unit, CPU). A function of the MMU includes translation from a virtual address to a physical address, memory protection, and CPU cache control.

In the computer system, for example, the task is the thread. Generally, one application is bound to one thread. When the thread runs in the user mode, if blocking, a page fault, or an interrupt occurs, the thread triggers a request to the kernel mode. Next, thread switching is performed in the kernel mode, and then the user mode is returned for running. For example, when a thread A runs in the user mode, if blocking, a page fault, or an interrupt occurs, the thread A triggers a request to the kernel mode. Next, thread switching is performed in the kernel mode, the thread A is switched to a thread B, and then the user mode is returned to run the thread B. Generally, to switch from the thread A to the thread B, user-mode contexts and kernel-mode contexts of the thread A and the thread B need to be switched, and scheduling statuses of the thread A and the thread B need to be processed. Such a large amount of switched content causes low thread switching efficiency, and affects performance of the computer system.

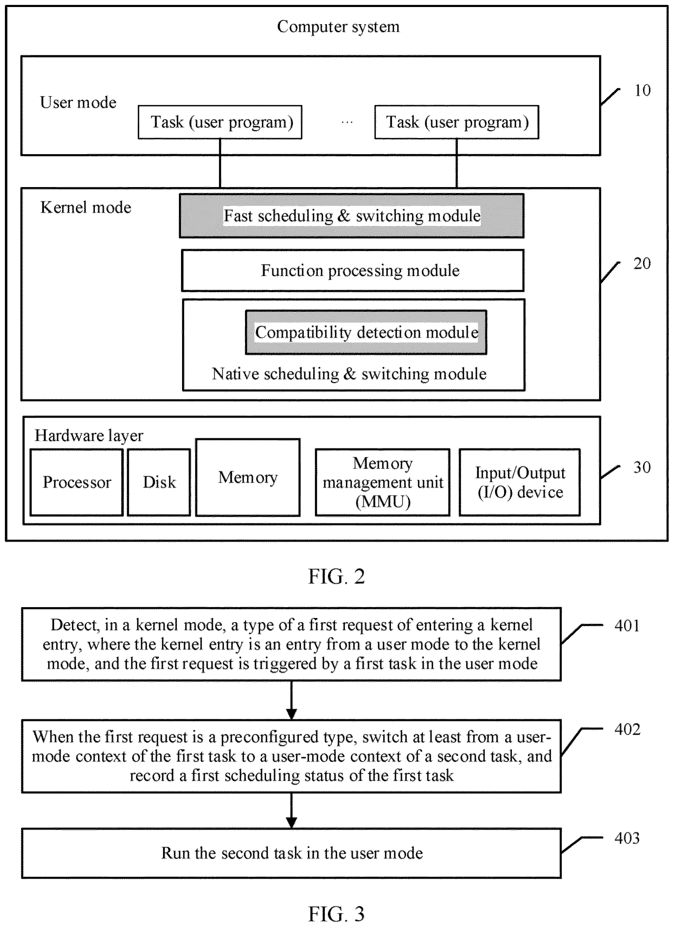

To improve user-mode process or thread switching efficiency, as shown in FIG. 2, an embodiment of this application provides another computer system. A kernel mode of the computer system includes a fast scheduling & switching module, a function processing module, and a native scheduling & switching module. The native scheduling & switching module may further include a compatibility detection module. The fast scheduling & switching module is equivalent to adding an intermediate layer between the native scheduling & switching module and a user mode, to perform fast scheduling & switching on a task that triggers a request to enter the kernel mode.

The fast scheduling & switching module is configured to implement fast switching of a user-mode task.

The function processing module is configured to process some operations such as lock operations, remote procedure call (remote procedure call, RPC), and kernel-mode context switching.

The native scheduling & switching module is configured to perform scheduling & switching of a process or a thread by using a native scheduling procedure of the computer system.

In this application, "scheduling" refers to scheduling a resource, and "switching" refers to switching a process or a thread. Scheduling may also be understood as a prerequisite step of switching.

The compatibility detection module is configured to implement compatibility between the fast scheduling & switching module and the function processing module and between the fast scheduling & switching module and the native scheduling & switching module.

Based on the computer system shown in FIG. 2, in a solution provided in embodiments of this application, in a process of processing a user-mode task, a procedure shown in FIG. 3 may be performed. As shown in FIG. 3, an embodiment of a task processing method provided in embodiments of this application includes the following steps.

401: A computer system detects, in a kernel mode, a type of a first request of entering a kernel entry, where the kernel entry is an entry from a user mode to the kernel mode, and the first request is triggered by a first task in the user mode.

In this embodiment of this application, the kernel entry may be any entry that may be used to enter the kernel mode from the user mode, for example, a system call entry, an exception entry, or an interrupt entry.

402: When the type of the first request indicates that the first task is suspended in the user mode, the computer system switches at least from a user-mode context of the first task to a user-mode context of a second task and records a first scheduling status of the first task.

The first scheduling status of the first task includes a suspended state of the first task in the user mode and a running time from a moment of starting to run the first task to a moment of suspending the first task.

The first scheduling status of the first task includes a part of all scheduling statuses of the first task.

In this embodiment of this application, a user-mode context is a group of data indispensable for running a task in the user mode, for example, data in a register of a processor. Switching from a user-mode context of the first task to a user-mode context of a second task means that data required for running the first task in the user mode is moved out of the register, and data required for running the second task in the user mode is written into the register. The register may include any one or more of a general-purpose register, a program counter (program counter, PC), a program state (program state, PS) register, and the like.

In this embodiment of this application, a scheduling status of a task may include a running state or a suspended state of the task, running duration of the task, namely, a running time from a moment of starting to run the task to a moment of suspending the task, and states such as whether the task enters a queue or leaves a queue, whether blocking, an interrupt, or exception occurs, and whether the task is called by using another thread. In this application, the first scheduling status of the first task includes the suspended state of the first task in the user mode and the running time from the moment of starting to run the first task to the moment of suspending the first task, and a second scheduling status of the first task is a scheduling status in all scheduling statuses of the first task other than the first scheduling status.

403: The computer system runs the second task in the user mode.

It can be learned from the foregoing description that, in the solution provided in this embodiment of this application, after the first request of the first task enters the kernel mode from the user mode, if it is determined, by detecting the type of the first request, that the first task is suspended in the user mode, only the suspended state of the first task in the user mode and the running time from the moment of starting to run the first task to the moment of suspending the first task are recorded, and other scheduling statuses are not processed. In this way, in a procedure of switching from the first task to the second task for running, processed content can be reduced, and switching efficiency can be improved. This improves performance of the computer system.

In this embodiment of this application, the type of the first request may be a preconfigured request type or a non-preconfigured request type, and the non-preconfigured request type is a request type that is not the preconfigured request type.

In this application, the preconfigured request type is related to a service scenario, and a quantity of occurrences of the preconfigured request type in the service scenario is greater than a quantity of occurrences of the non-preconfigured request type in the service scenario.

In this application, preconfigured request types in some service scenarios are listed as follows:

In a service scenario focusing on a file system, the preconfigured request type may be one or more of types such as creating, reading, or writing a file, a directory, content of a soft link, or a file attribute, controlling or managing a file descriptor, or monitoring a file. Different request types may be represented by different identifiers. For example, a type of a request of creating the file may be represented by 00001, and a type of a request of reading the file may be represented by 00002. Certainly, different request types may alternatively be represented in other manners, as long as the corresponding request types can be determined. A specific representation form of the request type is not limited in this application.

In a service scenario focusing on a network system, the preconfigured request type may be one or more of a request type for receiving a data packet, a request type for sending a data packet, or a request type for listening.

In a service scenario focusing on hardware driver input/output (input/output, I/O), the preconfigured request type may be a request type of a driver I/O.

In a service scenario focusing on I/O multiplexing, the preconfigured request type may be a request type of an I/O operation.

In a service scenario focusing on a clock (Timer) operation, the preconfigured request type may be a clock request type.

In a service scenario focusing on a memory operation, the preconfigured request type may be a request type related to a memory request.

In a service scenario focusing on signal processing, the preconfigured request type may be a request type of a wait signal.

In a service scenario focusing on inter-process communication, the preconfigured request type may be a request type of a remote procedure call (remote procedure call, RPC), a request type of a sent message, or a request type of a synchronization lock operation.

In a service scenario focusing on file system management, the preconfigured request type may be a mount request type or a status obtaining request type.

In a scenario focusing on an asynchronous operation, the preconfigured request type may be a request type for converting a synchronous operation into an asynchronous operation.

The foregoing is merely some examples. In different service scenarios, selection of the preconfigured request type may be determined based on an actual situation. This is not limited in this application.

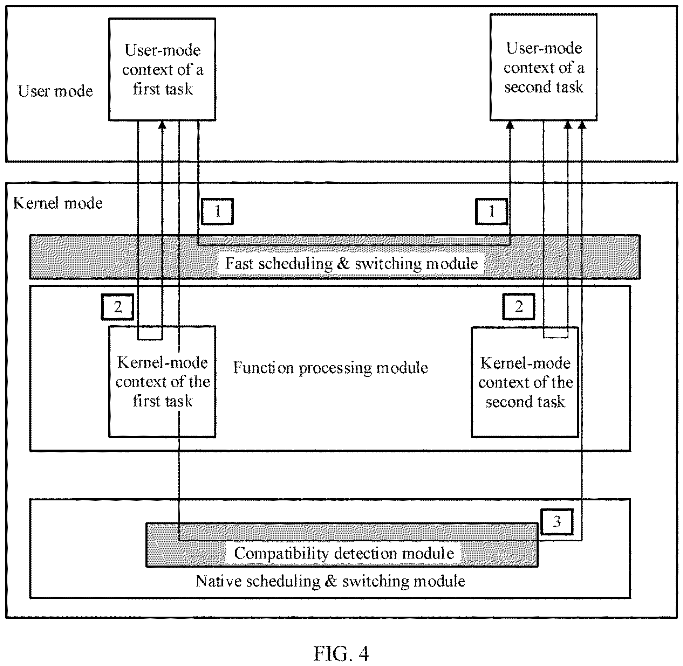

Based on a structure of the system shown in FIG. 2 and the solution shown in FIG. 3, in the process of processing the user-mode task, an embodiment of this application provides two fast switching solutions and a native switching solution based on fast switching, these task switching solutions may be understood with reference to a schematic diagram of a structure shown in FIG. 4.

As shown in FIG. 4, the user mode includes the first task and the second task. FIG. 4 shows three switching solutions.

Switching solution 1: When the first task is switched to the second task, a path 1 in FIG. 4 is executed: Only the user-mode context of the first task and the user-mode context of the second task need to be switched, the first scheduling status needs to be recorded, and the second scheduling status is not processed.

Switching solution 2: When the first task is switched to the second task, a path 2 in FIG. 4 is executed: Not only the user-mode context of the first task and the user-mode context of the second task need to be switched, but also a kernel-mode context of the first task and a kernel-mode context of the second task need to be switched, the first scheduling status is recorded, and the second scheduling status is not processed.

Switching solution 3: When the first task is switched to the second task, after the user-mode contexts and the kernel-mode contexts are switched, a path 3 in FIG. 4 is executed, and a native scheduling procedure further needs to be performed.

The three switching solutions are described as follows:

### Switching solution 1:

When the type of the first request is the preconfigured request type, the user-mode context of the first task is switched to the user-mode context of the second task, the kernel-mode context of the first task is not switched to the kernel-mode context of the second task, the first scheduling status of the first task is recorded, and the second scheduling status of the first task is not processed. The first scheduling status of the first task indicates the suspended state of the first task in the user mode and the running time from the moment of starting to run the first task to the moment of suspending the first task. The second scheduling status is the scheduling status in all the scheduling statuses of the first task other than the first scheduling status of the first task.

In this embodiment of this application, the preconfigured request type is a predefined type in which a kernel-mode context does not need to be switched, for example, the preconfigured request type in each service scenario listed above.

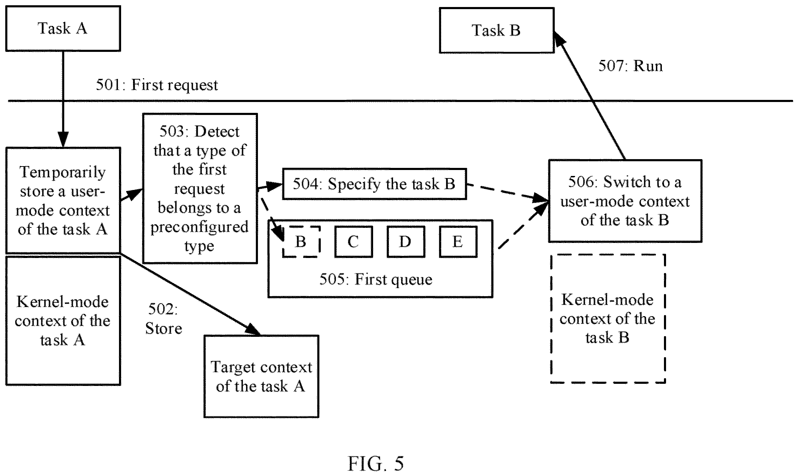

The switching solution may be understood with reference to FIG. 5. As shown in FIG. 5, a procedure of switching from a task A (equivalent to the foregoing first task) to a task B (equivalent to the foregoing second task) may include the following steps.

501: The task A running in the user mode triggers a first request to the kernel mode.

502: Temporarily store a user-mode context of the task A, and store the temporarily stored user-mode context of the task A as a target context.

The procedure may be moving the user-mode context of the task A out of the register and storing the user-mode context to a memory.

In this procedure, the user-mode context of the task A may be stored based on a target structure, so that a user-mode context of the target structure is referred to as the target context.

The target context is used when the task A is scheduled next time.

503: Detect a type of the first request.

If the first request is a preconfigured request type, it is determined that the switching solution of the path 1 shown in FIG. 4 is performed in the current task switching procedure, and 504 or 505 may be performed.

504: When the first request includes information about the task B, schedule the task B based on the information about the task B.

When the task A initiates the first request, the computer system directly specifies, in the user mode, the information about the to-be-switched task B, where the information about the task B may be an identifier of the task B. In this way, in the kernel mode, the computer system may directly schedule the task B based on the information about the task B to perform switching. This further improves task switching efficiency.

505: When the first request does not include information about the task B, schedule the task B from a first queue.

The task B is in the first queue, the first queue is a first in first out (First In First Out, FIFO) queue, and the task B is a task that first enters the first queue among all tasks in the first queue.

506: Switch to a user-mode context of the task B, record only a first scheduling status, and do not process a second scheduling status.

507: Run the task B in the user mode.

It can be learned from FIG. 5 that in the switching solution 1, only the user-mode contexts are switched, and kernel-mode contexts are not switched. Although the task B runs in the user mode, a kernel-mode context of the task A is retained in the kernel mode.

In the switching solution 1 provided in this embodiment of this application, for a request of the preconfigured request type, only the user-mode contexts of the first task and the second task need to be switched, and the kernel-mode contexts do not need to be switched. In addition, only the first scheduling status is recorded, and the second scheduling status is not processed. This further improves efficiency of switching from the first task to the second task.

### Switching solution 2:

When the type of the first request is the non-preconfigured request type, in other words, the type of the first request is not the preconfigured request type, the user-mode context of the first task is switched to the user-mode context of the second task, the kernel-mode context of the first task is switched to the kernel-mode context of the second task, the first scheduling status of the first task is recorded, and the second scheduling status of the first task is not processed.

The kernel-mode context is a group of kernel-mode data that supports task running. When the type of the first request is not the preconfigured request type, for example, an interrupt request or an exception request in some scenarios, the kernel-mode context is further switched when the user-mode context is switched.

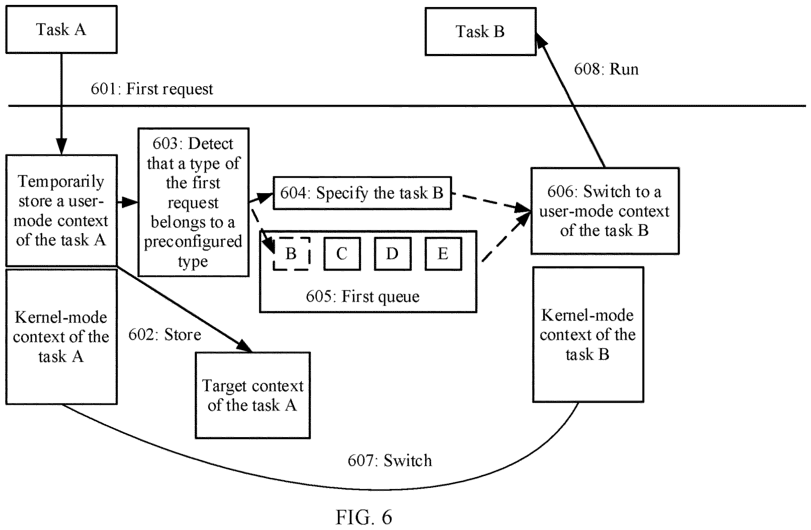

The switching solution may be understood with reference to FIG. 6. As shown in FIG. 6, a procedure of switching from a task A (equivalent to the foregoing first task) to a task B (equivalent to the foregoing second task) may include the following steps.

601: The task A running in the user mode triggers a first request to the kernel mode.

602: Temporarily store a user-mode context of the task A, and store the temporarily stored user-mode context of the task A as a target context.

The procedure may be moving the user-mode context of the task A out of the register and storing the user-mode context to a memory.

In this procedure, the user-mode context of the task A may be stored based on a target structure, so that a user-mode context of the target structure is referred to as the target context.

The target context is used when the task A is scheduled next time.

603: Detect a type of the first request.

If the type of the first request is not the preconfigured request type, for example, the interrupt request or the exception request, it is determined that the switching solution of the path 2 shown in FIG. 4 is performed in the current task switching procedure, and 604 or 605 may be performed.

604: When the first request includes information about the task B, the task B is scheduled based on the information about the task B.

When the task A initiates the first request, the computer system directly specifies, in the user mode, the information about the to-be-switched task B, where the information about the task B may be an identifier of the task B. In this way, in the kernel mode, the computer system may directly schedule the task B based on the information about the task B to perform switching. This further improves task switching efficiency.

605: When the first request does not include information about the task B, the task B is scheduled from a first queue.

The task B is in the first queue, the first queue is a first in first out (First In First Out, FIFO) queue, and the task B is a task that first enters the first queue among all tasks in the first queue.

606: Switch to a user-mode context of the task B, record only a first scheduling status, and do not process a second scheduling status.

607: Switch to a kernel-mode context of the task B.

608: Run the task B in the user mode.

In the switching solution 2 provided in this embodiment of this application, for a request that is not the preconfigured request type, only the user-mode contexts and the kernel-mode contexts of the first task and the second task need to be switched. In addition, only the first scheduling status is recorded, and the second scheduling status is not processed. This further improves efficiency of switching from the first task to the second task.

Based on the foregoing switching solution 1 and the foregoing switching solution 2, an embodiment of this application further provides a recursive switching solution. The recursive switching solution includes: after running the second task in the user mode, detecting a type of a second request of entering the kernel entry, where the second request is triggered by a target task in the user mode, the target task is the second task or a last task in at least one task that continuously runs after the second task, and the second task and the at least one task both trigger a request of the preconfigured request type; when the type of the second request indicates that the target task is suspended in the user mode, and the type of the second request is the preconfigured request type, recording a first scheduling status of the target task, and switching only from a user-mode context of the target task to a user-mode context of a third task, where the first scheduling status of the target task includes a suspended state of the target task in the user mode and a running time from a moment of starting to run the target task to a moment of suspending the target task; and running the third task in the user mode.

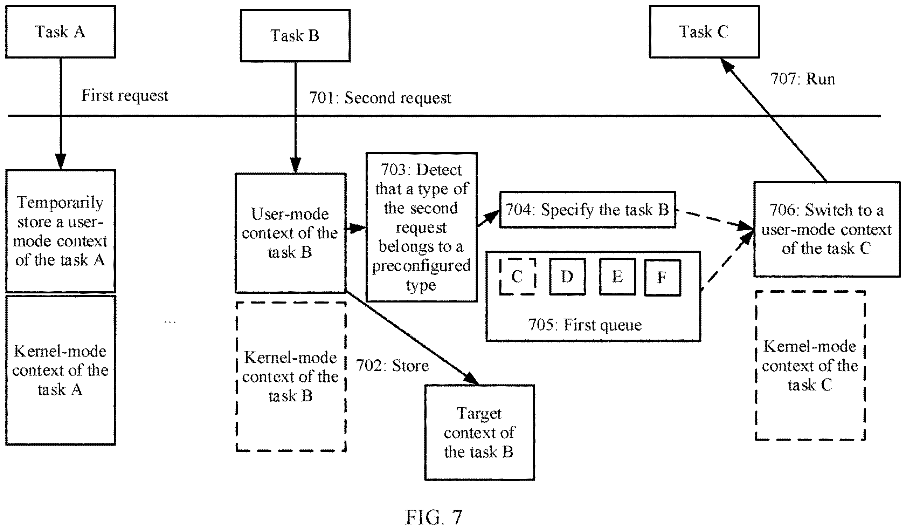

This solution may be understood as switching from a task A to a task B by using the path 1 in FIG. 4, and then switching to a task C by using the path 1. An example in which the target task is the second task is used. This procedure may be understood with reference to FIG. 7. As shown in FIG. 7, a recursive switching procedure may include the following steps.

701: The task B running in the user mode triggers a second request to the kernel mode.

702: Temporarily store a user-mode context of the task B, and store the temporarily stored user-mode context of the task B as a target context.

The procedure may be moving the user-mode context of the task B out of the register and storing the user-mode context to a memory.

In this procedure, the user-mode context of the task B may be stored based on a target structure, so that a user-mode context of the target structure is referred to as the target context.

The target context is used when the task B is scheduled next time.

703: Detect a type of the second request.

If the second request is a preconfigured request type, it is determined that the switching solution of the path 1 shown in FIG. 4 is performed in the current task switching procedure, and 704 or 705 may be performed.

704: When the second request includes information about the task C, schedule the task C based on the information about the task C.

When the task B initiates the second request, the computer system directly specifies, in the user mode, the information about the to-be-switched task C, where the information about the task C may be an identifier of the task C. In this way, in the kernel mode, the computer system may directly schedule the task C based on the information about the task C to perform switching. This further improves task switching efficiency.

705: When the second request does not include information about the task C, schedule the task C from a first queue.

The task C is in the first queue, the first queue is an FIFO queue, and the task C is a task that first enters the first queue among all tasks in the first queue.

706: Switch to a user-mode context of the task C, record only a first scheduling status, and do not process a second scheduling status.

707: Run the task C in the user mode.

It can be learned from FIG. 7 that in the recursive switching solution, only the user-mode contexts of the tasks are switched, and kernel-mode contexts are not switched. Although the task C runs in the user mode, a kernel-mode context of the task A is retained in the kernel mode.

According to the recursive switching solution provided in this embodiment of this application, for a request of the preconfigured request type, only the user-mode context of the task B needs to be switched, and the kernel-mode context of the task A may continue to be retained in the kernel mode. This further improves task switching efficiency. In addition, this embodiment lists only a case in which the target task is the second task. If a plurality of requests that trigger the preconfigured request type occur consecutively after the second task, only a user-mode context of a task may be switched each time. This greatly improves switching efficiency.

Similarly, a switching solution B may be performed based on the foregoing switching solution 1. This case may be understood as follows: After a task A is switched to a task B by using the path 1 in FIG. 4, the task B triggers a second request in the user mode. A processing procedure of this case includes: detecting a type of the second request of entering the kernel entry, where the second request is triggered by a target task in the user mode, the target task is the second task or a last task in at least one task that continuously runs after the second task, and when the target task is the last task in the at least one task, the second task and each task that is in the at least one task and that runs before the target task triggers requests of preconfigured request types; and when the type of the second request indicates that the target task is suspended in the user mode, and the type of the second request is a non-preconfigured request type, recording a first scheduling status of the target task, and switching from the kernel-mode context of the first task to a kernel-mode context of the target task, where the first scheduling status of the target task includes a suspended state of the target task in the user mode and a running time from a moment of starting to run the target task to a moment of suspending the target task.

In this embodiment of this application, after the first task is switched to the second task by switching only the user-mode context and recording the first scheduling status of the first task, the second task initiates the second request of the non-preconfigured request type; or if the second task and several consecutive tasks all initiate requests of preconfigured request types, and the second request of the non-preconfigured request type is initiated only when the target task arrives, the kernel-mode context of the first task needs to be directly switched to the kernel-mode context of the target task. This reduces switched content, and improves switching efficiency.

In this embodiment of this application, when the target task is not blocked, after the switching from the kernel-mode context of the first task to a kernel-mode context of the target task, the method further includes: returning to the user mode to continue to run the target task. In other words, when the kernel-mode context of the first task is switched to the kernel-mode context of the target task, if the target task is not blocked, the user mode may be returned to continue to run the target task. This implements fast restoration of the target task.

In this embodiment of this application, after the kernel-mode context of the first task is switched to the kernel-mode context of the target task, if the target task is blocked, a third task needs to be scheduled by using the native scheduling procedure. The native scheduling procedure is a procedure in which not only user-mode contexts and kernel-mode contexts need to be switched, but also all scheduling statuses of a task before switching need to be processed during task switching. This procedure may be understood as follows: When the target task is blocked, the method further includes: scheduling the third task by using the native scheduling procedure, and switching from the target task to the third task, where the native scheduling procedure needs to process all scheduling statuses from the first task to each task in the at least one task; and running the third task in the user mode.

The native scheduling procedure is the switching solution 3 of the path 3 described in FIG. 4. The following describes the switching solution 3.

### Switching solution 3:

A procedure of the switching solution 3 may be performed when it is determined that the type of the second request is not the preconfigured request type.

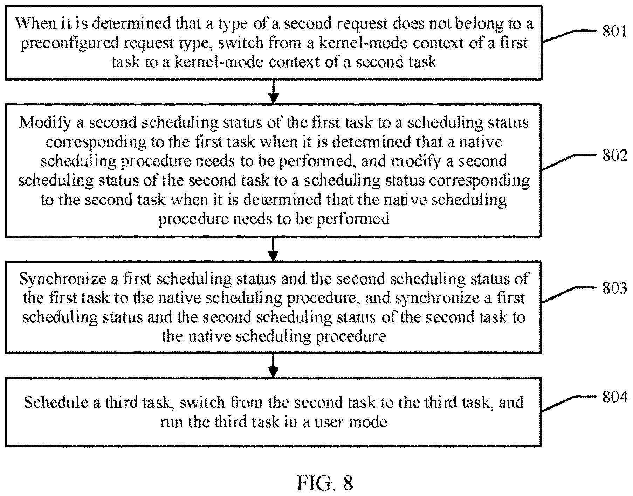

As shown in FIG. 8, an example in which the target task is the second task is used in the procedure. A procedure of determining that the native scheduling procedure needs to be performed includes the following steps.

801: When it is determined that the type of the second request is not the preconfigured request type, switch from the kernel-mode context of the first task to the kernel-mode context of the second task.

802: Modify the second scheduling status of the first task to a scheduling status corresponding to the first task when it is determined that the native scheduling procedure needs to be performed, and modify a second scheduling status of the second task to a scheduling status corresponding to the second task when it is determined that the native scheduling procedure needs to be performed.

803: Synchronize the first scheduling status and the second scheduling status of the first task to the native scheduling procedure, and synchronize a first scheduling status and the second scheduling status of the second task to the native scheduling procedure.

804: Schedule a third task, switching from the second task to the third task, and run the third task in the user mode.

The foregoing is a case in which the target task is not the second task. The scheduling the third task by using the native scheduling procedure is specifically: modifying a second scheduling status from the first task to each task in the at least one task from a scheduling status, of each task, in a case in which the task starts to run to a scheduling status corresponding to each task when it is determined that the native scheduling procedure is performed on the third task, where the second scheduling status of each task is a scheduling status in all scheduling statuses of the task other than a first scheduling status of the task.

In other words, when the native scheduling procedure is performed, latest scheduling statuses of the first task, the second task, and each task in the at least one task need to be synchronized. In this way, a kernel may not sense fast switching that occurs before the first task, the second task, and the at least one task, and switching that occurs before these tasks does not affect the native scheduling procedure and is better compatible with the native scheduling procedure.

The scheduling status synchronization procedure described in step 803 includes queue synchronization. A queue synchronization procedure includes: synchronizing the at least one task in the first queue and a scheduling status of the at least one task to a second queue, synchronizing information that has been output by the second task from the first queue to the second queue, and then synchronizing information about a location of the at least one task in the second queue to the first queue, where the second queue is a queue used for the native scheduling procedure.

In this embodiment of this application, the first queue may be referred to as a fast queue, the second queue may be referred to as a slow queue, and the slow queue is used to perform the native scheduling procedure. Before the native scheduling procedure is performed, all tasks in the fast queue need to be synchronized to the slow queue. In this way, the native scheduling procedure is more compatible. After the tasks in the fast queue are synchronized to the slow queue, the tasks in the slow queue may be rearranged based on actual situations of the tasks, and these tasks are inserted into proper locations in the slow queue. Then, information about a location, in the slow queue, of at least one task in the fast queue is synchronized to the fast queue, so that the fast queue optimizes a sequence of the at least one task in the fast queue based on the information about the location. In this way, the tasks in the fast queue can obtain more opportunities of being fairly scheduled.

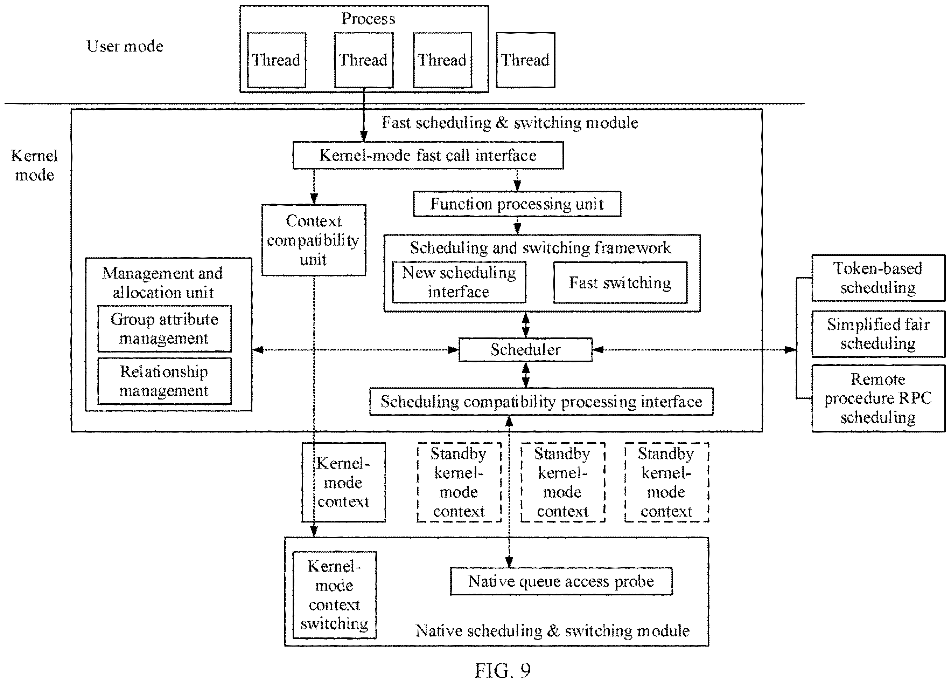

In this embodiment of this application, the foregoing task processing procedure may be applied to a plurality of scenarios such as token-based scheduling, simplified fair scheduling, and RPC scheduling. For a solution of combining the several scenarios with a computer system, refer to FIG. 9 for understanding.

As shown in FIG. 9, in a structure of the computer system, a user mode may include a plurality of processes, and each process may include a plurality of threads.

With reference to the computer system shown in FIG. 2, the fast scheduling & switching module may include the following functional units:
kernel-mode fast call interface: The kernel-mode fast call interface may be understood as a kernel entry. The first request or the second request in the foregoing embodiment enters the kernel-mode fast call interface, and a type of the first request or the second request may be detected in the kernel-mode fast call interface, to determine a subsequent step, for example, enter a function processing unit or a context compatibility unit;
function processing unit, configured to process functions that can be fast processed. Generally, the function is a function that is simple and independent of a native procedure, for example, a lock operation is processed;
scheduling and switching framework including a new scheduling interface and a fast switching unit. The new scheduling interface is configured to schedule a task in a fast queue, and the fast switching unit is configured to switch a user-mode context of a task by using a fast path (the foregoing path 1);
scheduler that supports different functions to implement different scheduling policies. For example, token-based scheduling, simplified fair scheduling in common and unlimited scenarios, and RPC scheduling based on remote call can be implemented;
context compatibility unit, configured to: if it is determined that the type of the first request or the second request is not a preconfigured request type, enter the context compatibility unit in the procedure, and switch a kernel-mode context of a task;
scheduling compatibility processing interface that provides a series of callback functions for a native queue access probe of native scheduling to implement data synchronization between fast switching and a native scheduling procedure; and
management and allocation unit: configured to manage a range of threads that can be fast scheduled, and including group attribute management and relationship management. The scheduler may perform token-based scheduling, simplified fair scheduling, RPC scheduling based on remote call, or the like through the management and allocation unit.

The native scheduling & switching module includes a kernel context switching unit and the native queue access probe. The kernel context switching unit is configured to switch a kernel-mode context of a task, and the native queue access probe is configured to implement data synchronization between fast switching and the native scheduling procedure.

The embodiment shown in FIG. 9 includes RPC scheduling and simplified fair scheduling. The following describes task processing procedures provided in embodiments of this application with reference to the two scheduling scenarios.

To ensure flexibility and security, a system is usually divided into a plurality of processes or threads, and a client (client) & server (server) model is used. When a thread is used as a client, other threads may be used as servers.

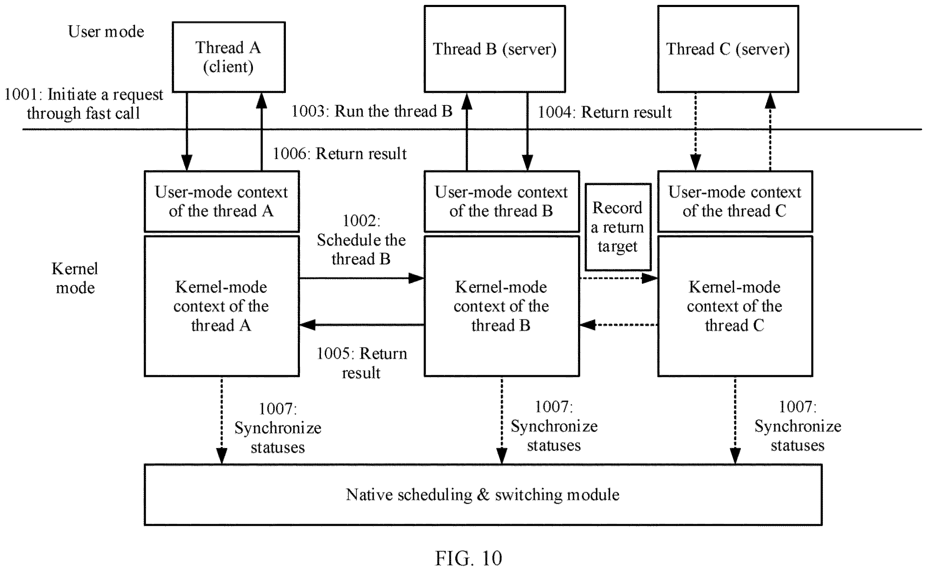

As shown in FIG. 10, in an RPC scheduling scenario, a procedure of a task processing method provided in this embodiment of this application includes the following steps.

1001: When a running thread A is used as a client (client), a request is initiated through fast call.

1002: Schedule a thread B based on information about the thread B included in the request.

In a kernel mode, the thread B is found by using a next thread (the information about the thread B, for example, an identifier of the thread B) specified in a user mode.

1003: After a return target is recorded, run the thread B in the user mode based on a user-mode context of the thread B.

1004: Obtain a return running result of the thread B.

1005: Return the return result to a kernel-mode context of the thread Abased on the return target recorded in step 1003.

1006: Return the return result from the kernel mode to the thread A in the kernel mode.

1007: In an execution procedure of any one of the foregoing procedures, if a problem that a native scheduling procedure needs to be performed occurs, need to synchronize scheduling statuses, for example, execution time and queue statuses of the thread A and the thread B. Herein, not only a task that is currently being executed is synchronized, but also all tasks that have been performed since previous synchronization are synchronized. Finally, this makes a native scheduling & switching module look as if the native scheduling & switching module does not perform fast switching.

In this example, RPC scheduling is implemented by using a fast switching method. The thread A used as the client specifies the thread B used as a server. In this case, the corresponding thread B may be woken up and scheduled, the thread A is marked as blocked, and a caller of the thread B is recorded as the thread A, and the thread A is woken up until the thread B returns a result. It can be learned from the foregoing RPC scheduling procedure that, in the processing solution in the RPC scheduling procedure in this application, a thread that needs to be scheduled is directly specified, and when contexts of the thread A and the thread B are switched, kernel-mode contexts may be switched, or kernel-mode contexts may not be switched. However, all scheduling statuses of the thread A and the thread B do not need to be processed. This improves a thread switching speed in the RPC scheduling procedure.

Compared with the DOMAIN, MQ+SHM, and PIPE solutions in the conventional technologies, the RPC scheduling solution provided in this embodiment of this application significantly improves a switching speed. A developer has performed a large quantity of experiments on these technologies in the RPC scheduling procedure. When a quantity of experiments of each technology is 100000, experiment results in the following Table 1 are obtained:

**Table 1: Experiment results**

| Test case | Communication mode | Quantity of experiments | Maximum value (nanosecond ns) | Minimum value (ns) | Average value (ns) |
|---|---|---|---|---|---|
| Case 1 | This application | 100000 | 49280 | 2240 | **2385** |
| Case 2 | DOMAIN | 100000 | 1025920 | 25800 | 43819 |
| Case 3 | MQ+SHM | 100000 | 1573960 | 19600 | 31074 |
| Case 4 | PIPE | 100000 | 1120000 | 23960 | 38055 |

It can be learned from Table 1 that, in the solution of this application, the RPC scheduling procedure is obviously improved by an order of magnitude compared with that in the other several conventional technologies.

The following describes a processing procedure in which a task processing procedure provided in this embodiment of this application is combined with a simplified fair scheduling scenario.

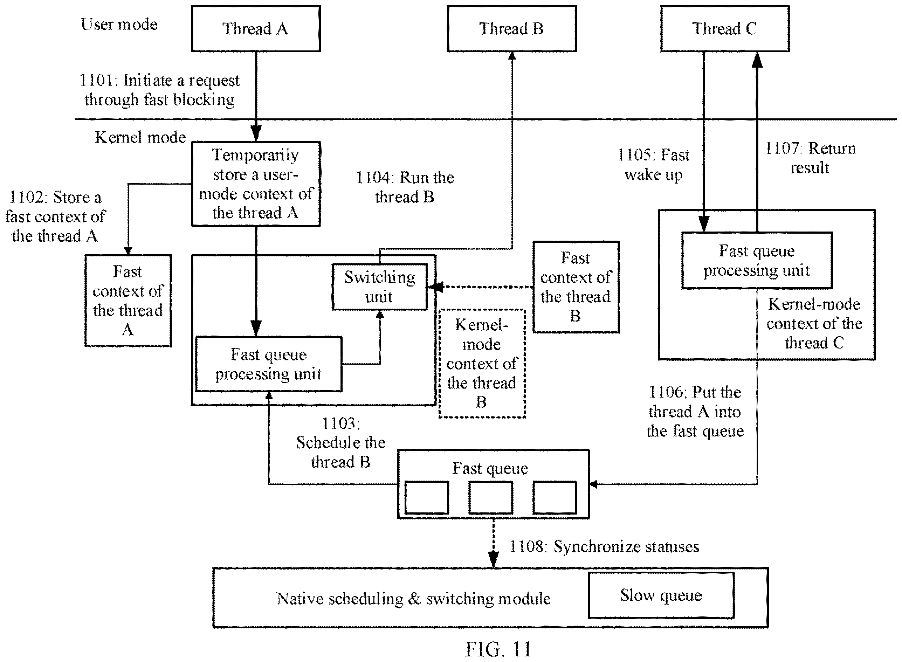

As shown in FIG. 11, the processing procedure includes the following steps.

1101: When a thread A runs in a user mode, the thread A is fast blocked, thereby triggering a request to a kernel mode.

After the thread A is fast blocked, the thread A enters a suspended state.

1102: Store a temporarily stored user-mode context of the thread A as a fast context of the thread A.

1103: Schedule a thread B from a fast queue through a fast queue processing unit.

The fast queue is an FIFO queue. Because the thread B is the thread that first enters the fast queue among all threads in the current queue, the thread B is preferentially scheduled.

1104: Switch to a fast context of the thread B through a switching unit, and then run the thread B in the user mode.

The fast context of the thread B may be stored when the thread B is fast blocked.

1105: In the kernel mode, a thread C wakes up the thread A through the fast queue processing unit.

1106: Put the thread A into the fast queue.

1107: Return a result of executing the thread A to the thread C.

1108: When any one of the foregoing procedures is performed in the kernel mode, if a problem that a native scheduling procedure needs to be performed occurs, need to synchronize scheduling statuses.

For example, execution time and queue statuses of the thread A and the thread B are synchronized. Herein, not only a task that is currently being executed is synchronized, but also all tasks that have been performed since previous synchronization are synchronized. Finally, this makes a native scheduling & switching module look as if the native scheduling & switching module does not perform fast switching.

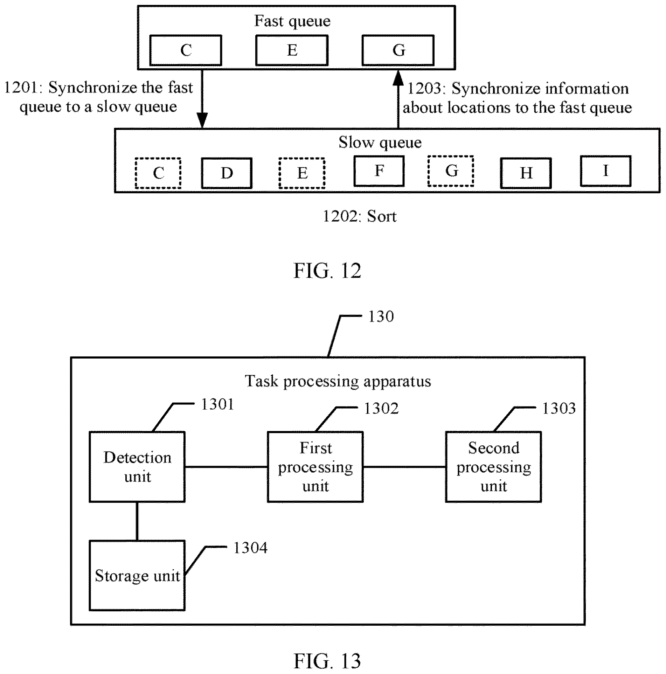

In addition, in this embodiment of this application, a procedure of synchronizing a fast queue and a slow queue occurs in a status synchronization procedure. The following describes the procedure of synchronizing the two queues with reference to FIG. 12.

As shown in FIG. 12, the procedure includes the following steps.

1201: Synchronize all tasks in the fast queue to the slow queue.

For example, a thread C, a thread E, and a thread G in the fast queue shown in FIG. 12 are all synchronized to the slow queue.

Herein, not only the thread C, the thread E, and the thread G are synchronized to the slow queue, but also running times of the threads that run during two synchronizations are synchronized to the slow queue. The running times of these threads may be determined in a load tracing manner.

It should be noted that, if a thread B is still in the slow queue, and the thread B has been output from the fast queue, the thread B in the slow queue also needs to be output.

1202: Reorder the threads synchronized from the fast queue in the slow queue.

In this step, the threads are sorted based on fairness.

1203: Synchronize information about locations, in the slow queue, of the threads in the fast queue back to the fast queue.

The foregoing describes the task processing method. The following describes a task processing apparatus provided in embodiments of this application with reference to accompanying drawings. The task processing apparatus includes a user mode and a kernel mode, the user mode includes a plurality of tasks, and the tasks are threads or processes.

As shown in FIG. 13, a task processing apparatus 130 provided in this embodiment of this application includes:
a detection unit 1301, configured to detect, in a kernel mode, a type of a first request of entering a kernel entry, where the kernel entry is an entry from a user mode to the kernel mode, and the first request is triggered by a first task in the user mode, where the detection unit 1301 is configured to perform step 401 in the method embodiment;
a first processing unit 1302, configured to: when the type that is of the first request and that is detected by the detection unit 1301 indicates that the first task is suspended in the user mode, switch at least from a user-mode context of the first task to a user-mode context of a second task, and record a first scheduling status of the first task, where the first scheduling status of the first task includes a suspended state of the first task in the user mode and a running time from a moment of starting to run the first task to a moment of suspending the first task, where the first processing unit 1302 is configured to perform step 402 in the method embodiment; and
a second processing unit 1303, configured to run, in the user mode, the second task switched by the first processing unit 1302, where the second processing unit 1303 is configured to perform step 403 in the method embodiment.

In this embodiment of this application, after the first request of the first task enters the kernel mode from the user mode, if it is determined, by detecting the type of the first request, that the first task is suspended in the user mode, only the suspended state of the first task in the user mode and the running time from the moment of starting to run the first task to the moment of suspending the first task are recorded, and other scheduling statuses are not processed. In this way, in a procedure of switching from the first task to the second task for running, processed content can be reduced, and switching efficiency can be improved. This improves performance of a computer system.

Optionally, the first processing unit 1302 is specifically configured to: when the type of the first request indicates that the first task is suspended in the user mode, and the type of the first request is a preconfigured request type, switch only from the user-mode context of the first task to the user-mode context of the second task.

Optionally, the first processing unit 1302 is specifically configured to: when the type of the first request indicates that the first task is suspended in the user mode, and the type of the first request is a non-preconfigured request type, switch from the user-mode context of the first task to the user-mode context of the second task, and switch from a kernel-mode context of the first task to a kernel-mode context of the second task.

Optionally, the preconfigured request type is related to a service scenario, and a quantity of occurrences of the preconfigured request type in the service scenario is greater than a quantity of occurrences of a non-preconfigured request type in the service scenario.

Optionally, the detection unit 1301 is further configured to detect a type of a second request of entering the kernel entry, where the second request is triggered by a target task in the user mode, the target task is the second task or a last task in the at least one task that continuously runs after the second task, and the second task and the at least one task both trigger a request of the preconfigured request type.

The first processing unit 1302 is further configured to: when the type of the second request indicates that the target task is suspended in the user mode, and the type of the second request is the preconfigured request type, record a first scheduling status of the target task, and switch only from a user-mode context of the target task to a user-mode context of a third task, where the first scheduling status of the target task includes a suspended state of the target task in the user mode and a running time from a moment of starting to run the target task to a moment of suspending the target task.

The second processing unit 1303 is further configured to run the third task in the user mode.

Optionally, the detection unit 1301 is further configured to detect a type of a second request of entering the kernel entry, where the second request is triggered by a target task in the user mode, and the target task is the second task or a last task in at least one task that continuously runs after the second task. When the target task is the last task in the at least one task, the second task and each task that is in the at least one task and that runs before the target task both trigger a request of the preconfigured request type.

The first processing unit 1302 is further configured to: when the type of the second request indicates that the target task is suspended in the user mode, and the type of the second request is a non-preconfigured request type, record a first scheduling status of the target task, and switch from the kernel-mode context of the first task to a kernel-mode context of the target task, where the first scheduling status of the target task includes a suspended state of the target task in the user mode and a running time from a moment of starting to run the target task to a moment of suspending the target task.

Optionally, the second processing unit 1303 is further configured to: when the target task is not blocked, return to the user mode to continue to run the target task.

Optionally, the second processing unit 1303 is further configured to: when the target task is blocked, schedule a third task by using a native scheduling procedure, and switch from the target task to the third task, where the native scheduling procedure needs to process all scheduling statuses from the first task to each task in the at least one task.

The second processing unit 1303 is further configured to run the third task in the user mode.

Optionally, the first processing unit 1302 is specifically configured to modify a second scheduling status from the first task to each task in the at least one task from a scheduling status, of each task, in a case in which the task starts to run to a scheduling status corresponding to each task when it is determined that the native scheduling procedure is performed on the third task, where the second scheduling status of each task is a scheduling status in all scheduling statuses of the task other than a first scheduling status of the task.

Optionally, during scheduling of a remote procedure call RPC, the first request includes information about the second task, and the information about the second task is used to schedule the second task.

Optionally, the apparatus 130 further includes a storage unit 1304. The storage unit 1304 is configured to: store the user-mode context of the first task; and when the type of the first request is the preconfigured request type, store the user-mode context of the first task as a target context, where the target context is used when the first task is scheduled next time.

Optionally, during scheduling of a remote procedure call RPC, the first request includes information about the second task, and the information about the second task is used to schedule the second task.

Optionally, the second processing unit 1303 is further configured to: record the first request and information associated with the first task; run the second task to obtain a return result; return the return result to the first task based on the information associated with the first task; and switch from the second task back to the first task to continue to run the first task.

Optionally, the second task is in a first queue, the first queue is a first in first out queue, and the second task is a task that first enters the first queue among all tasks in the first queue.

Optionally, in a simplified fair scheduling scenario, the second processing unit 1303 is further configured to: synchronize a task in the first queue and a scheduling status of the task in the first queue to a second queue, and synchronize, to the second queue, information that has been output by the third task from the first queue, where the second queue is a queue used for the native scheduling procedure; and synchronize information about a location, in the second queue, of the task in the first queue to the first queue, where the information about the location is used to adjust a location, in the first queue, of the task in the first queue.

For related content of the task processing apparatus 130 provided in this embodiment of this application, refer to corresponding content in the foregoing method embodiments for understanding. Details are not described herein again.

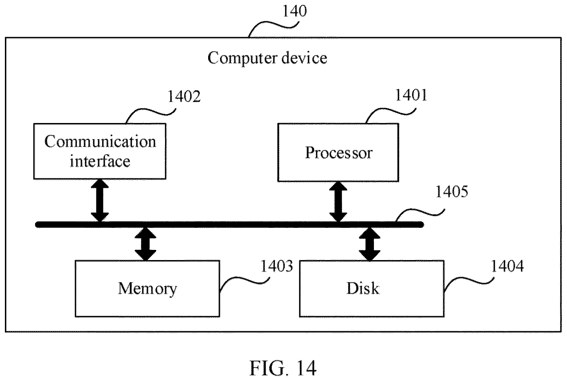

FIG. 14 is a schematic diagram of a possible logical structure of a computer device 140 according to an embodiment of this application. The computer device 140 includes a processor 1401, a communication interface 1402, a memory 1403, a disk 1404, and a bus 1405. The processor 1401, the communication interface 1402, the memory 1403, and the disk 1404 are connected to each other through the bus 1405. In this embodiment of this application, the processor 1401 is configured to control and manage an action of the computer device 140. For example, the processor 1401 is configured to perform the steps in the method embodiments in FIG. 3 to FIG. 12. The communication interface 1402 is configured to support the computer device 140 in performing communication. The memory 1403 is configured to: store program code and data of the computer device 140, and provide memory space for a process or a thread. The disk is configured to store a physical page swapped out of the memory.

The processor 1401 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor 1401 may be a combination of processors implementing a computing function, for example, a combination of one or more microprocessors, or a combination of the digital signal processor and a microprocessor. The bus 1405 may be a peripheral component interconnect (Peripheral Component Interconnect, PCI) bus, an extended industry standard architecture (Extended Industry Standard Architecture, EISA) bus, or the like. Buses may be classified into an address bus, a data bus, a control bus, and the like. For ease of representation, only one bold line is used to represent the bus in FIG. 14, but this does not mean that there is only one bus or only one type of bus.

In another embodiment of this application, a computer-readable storage medium is further provided. The computer-readable storage medium stores computer-executable instructions. When a processor of a device executes the computer-executable instructions, the device performs the steps performed by the processor in FIG. 3 to FIG. 8.

In another embodiment of this application, a computer program product is further provided. The computer program product includes computer-executable instructions, and the computer-executable instructions are stored in a computer-readable storage medium. When a processor of a device executes the computer-executable instructions, the device performs the steps performed by the processor in FIG. 3 to FIG. 12.

In another embodiment of this application, a chip system is further provided. The chip system includes a processor, and the processor is configured to support the task processing apparatus to implement the steps performed by the processor in FIG. 3 to FIG. 12. In a possible design, the chip system may further include a memory, and the memory is configured to store program instructions and data that are necessary for the data task processing apparatus. The chip system may include a chip, or may include a chip and another discrete component.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of embodiments of this application.

It may be clearly understood by a person skilled in the art that, for the purpose of convenient and brief description, for a detailed working procedure of the foregoing system, apparatus, and unit, refer to a corresponding procedure in the foregoing method embodiments. Details are not described herein again.

In the several embodiments provided in embodiments of this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When functions are implemented in a form of a software functional unit and sold or used as an independent product, the functions may be stored in a computer-readable storage medium. Based on such an understanding, the technical solutions in embodiments of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, for example, a USB flash drive, a removable hard disk, a read-only memory (Read-Only Memory, ROM), a random access memory (Random Access Memory, RAM), a magnetic disk, or an optical disc.

## Claims

1. A task processing method, wherein the method is applied to a computer system, the computer system comprises a user mode and a kernel mode, the user mode comprises a plurality of tasks, the tasks are threads or processes, and the method comprises:
detecting, in the kernel mode, a type of a first request of entering a kernel entry, wherein the kernel entry is an entry from the user mode to the kernel mode, and the first request is triggered by a first task in the user mode;
when the type of the first request indicates that the first task is suspended in the user mode, switching at least from a user-mode context of the first task to a user-mode context of a second task and recording a first scheduling status of the first task, wherein the first scheduling status of the first task comprises a suspended state of the first task in the user mode and a running time from a moment of starting to run the first task to a moment of suspending the first task; and
running the second task in the user mode.

2. The method according to claim 1, wherein the switching at least from a user-mode context of the first task to a user-mode context of a second task when the type of the first request indicates that the first task is suspended in the user mode is specifically:
when the type of the first request indicates that the first task is suspended in the user mode, and the type of the first request is a preconfigured request type, switching only from the user-mode context of the first task to the user-mode context of the second task.

3. The method according to claim 1 or 2, wherein the switching at least from a user-mode context of the first task to a user-mode context of a second task when the type of the first request indicates that the first task is suspended in the user mode is specifically:
when the type of the first request indicates that the first task is suspended in the user mode, and the type of the first request is a non-preconfigured request type, switching from the user-mode context of the first task to the user-mode context of the second task, and switching from a kernel-mode context of the first task to a kernel-mode context of the second task.

4. The method according to claim 2, wherein the preconfigured request type is related to a service scenario, and a quantity of occurrences of the preconfigured request type in the service scenario is greater than a quantity of occurrences of a non-preconfigured request type in the service scenario.

5. The method according to claim 2, wherein after the running the second task in the user mode, the method further comprises:
detecting a type of a second request of entering the kernel entry, wherein the second request is triggered by a target task in the user mode, the target task is the second task or a last task in at least one task that continuously runs after the second task, and the second task and the at least one task both trigger a request of the preconfigured request type;
when the type of the second request indicates that the target task is suspended in the user mode, and the type of the second request is the preconfigured request type, recording a first scheduling status of the target task, and switching only from a user-mode context of the target task to a user-mode context of a third task, wherein the first scheduling status of the target task comprises a suspended state of the target task in the user mode and a running time from a moment of starting to run the target task to a moment of suspending the target task; and
running the third task in the user mode.

6. The method according to claim 2, wherein after the running the second task in the user mode, the method further comprises:
detecting a type of a second request of entering the kernel entry, wherein the second request is triggered by a target task in the user mode, and the target task is the second task or a last task in at least one task that continuously runs after the second task; and when the target task is the last task in the at least one task, the second task and each task that is in the at least one task and that runs before the target task both trigger a request of the preconfigured request type; and
when the type of the second request indicates that the target task is suspended in the user mode, and the type of the second request is a non-preconfigured request type, recording a first scheduling status of the target task, and switching from the kernel-mode context of the first task to a kernel-mode context of the target task, wherein the first scheduling status of the target task comprises a suspended state of the target task in the user mode and a running time from a moment of starting to run the target task to a moment of suspending the target task.

7. The method according to claim 6, wherein when the target task is not blocked, after the switching from the kernel-mode context of the first task to a kernel-mode context of the target task, the method further comprises:
returning to the user mode to continue to run the target task.

8. The method according to claim 6, wherein when the target task is blocked, the method further comprises:
scheduling a third task by using a native scheduling procedure, and switching from the target task to the third task, wherein the native scheduling procedure needs to process all scheduling statuses from the first task to each task in the at least one task; and
running the third task in the user mode.

9. The method according to claim 8, wherein the scheduling a third task by using a native scheduling procedure is specifically:
modifying a second scheduling status from the first task to each task in the at least one task from a scheduling status, of each task, in a case in which the task starts to run to a scheduling status corresponding to each task when it is determined that the native scheduling procedure is performed on the third task, wherein the second scheduling status of each task is a scheduling status in all scheduling statuses of the task other than a first scheduling status of the task.

10. The method according to any one of claims 1 to 4, wherein during scheduling of a remote procedure call RPC, the first request comprises information about the second task, and the information about the second task is used to schedule the second task.

11. The method according to claim 10, wherein the method further comprises:
recording the first request and information associated with the first task;
running the second task to obtain a return result;
returning the return result to the first task based on the information associated with the first task; and
switching from the second task back to the first task to continue to run the first task.

12. The method according to any one of claims 1 to 4, wherein the second task is in a first queue, the first queue is a first in first out queue, and the second task is a task that first enters the first queue among all tasks in the first queue.

13. The method according to claim 9, wherein during scheduling of simplified fair scheduling, before performing the native scheduling procedure for the third task, the method further comprises:
synchronizing a task in a first queue and a scheduling status of the task in the first queue to a second queue, and synchronizing, to the second queue, information that has been output by the third task from the first queue, wherein the second queue is a queue used for the native scheduling procedure; and
synchronizing information about a location, in the second queue, of the task in the first queue to the first queue, wherein the information about the location is used to adjust a location, in the first queue, of the task in the first queue.

14. A task processing apparatus, wherein the apparatus comprises a user mode and a kernel mode, the user mode comprises a plurality of tasks, the tasks are threads or processes, and the apparatus comprises:
a detection unit, configured to detect, in the kernel mode, a type of a first request of entering a kernel entry, wherein the kernel entry is an entry from the user mode to the kernel mode, and the first request is triggered by a first task in the user mode;
a first processing unit, configured to: when the type that is of the first request and that is detected by the detection unit indicates that the first task is suspended in the user mode, switch at least from a user-mode context of the first task to a user-mode context of a second task, and record a first scheduling status of the first task, wherein the first scheduling status of the first task comprises a suspended state of the first task in the user mode and a running time from a moment of starting to run the first task to a moment of suspending the first task; and
a second processing unit, configured to run, in the user mode, the second task switched by the first processing unit.

15. The apparatus according to claim 14, wherein
the first processing unit is specifically configured to: when the type of the first request indicates that the first task is suspended in the user mode, and the type of the first request is a preconfigured request type, switch only from the user-mode context of the first task to the user-mode context of the second task.

16. The apparatus according to claim 14 or 15, wherein
the first processing unit is specifically configured to: when the type of the first request indicates that the first task is suspended in the user mode, and the type of the first request is a non-preconfigured request type, switch from the user-mode context of the first task to the user-mode context of the second task, and switch from a kernel-mode context of the first task to a kernel-mode context of the second task.

17. A computer-readable storage medium, storing a computer program, wherein when the computer program is executed by one or more processors, the method according to any one of claims 1 to 13 is implemented.

18. A computing device, comprising one or more processors and a computer-readable storage medium storing a computer program, wherein
when the computer program is executed by the one or more processors, the method according to any one of claims 1 to 13 is implemented.

19. A chip system, comprising one or more processors, wherein the one or more processors are called to perform the method according to any one of claims 1 to 13.

20. A computer program product, comprising a computer program, wherein when executed by one or more processors, the computer program is used to implement the method according to any one of claims 1 to 13.
